## Europäisches Patentamt

## European Patent Office

## Office européen des brevets

(19)

(11) Veröffentlichungsnummer: **0 307 555**
**B1**

(12) **EUROPÄISCHE PATENTSCHRIFT**

(45) Veröffentlichungstag der Patentschrift:
28.11.90

(51) Int. Cl.⁵: **A47J 27/00**, A47J 37/10,
H05B 3/68

(21) Anmeldenummer: **88109898.2**

(22) Anmeldetag: **22.06.88**

(54) Verfahren zur Herstellung eines Kochgefässes.

(30) Priorität: **15.09.87 DE 3730978**
**26.10.87 DE 8714743 U**

(73) Patentinhaber: **Vandaele, Stephan, Zeedijk het**
**Zoute 843 Bus 22, B-8300 Knokke-Heist(BE)**

(43) Veröffentlichungstag der Anmeldung:
**22.03.89 Patentblatt 89/12**

(72) Erfinder: **Vandaele, Stephan, Zeedijk het**
**Zoute 843 Bus 22, B-8300 Knokke-Heist(BE)**

(45) Bekanntmachung des Hinweises auf die Patenterteilung:
**28.11.90 Patentblatt 90/48**

(74) Vertreter: **Hassler, Werner, Dr.,**
**Postfach 17 04 Asenberg 62, D-5880 Lüdenscheid(DE)**

(84) Benannte Vertragsstaaten:
**BE CH DE GB LI NL**

(56) Entgegenhaltungen:
EP-A- 0 111 445
DE-A- 1 527 540
US-A- 3 095 498
US-A- 4 045 653
US-A- 4 115 918

ACTORUM AG

## Beschreibung

Die Erfindung betrifft ein Verfahren zur Herstellung eines Kochgefäßes aus Edelstahl mit einer bodenseitigen Aluminiumplatte, wonach eine Aluminiumplatte oder ein Aluminiumring unter Anwendung von Wärme und Druck durch ein Reibschweißverfahren auf die Bodenfläche des Kochgefäßes aufgepreßt und damit verbunden wird.

Anwendungsgebiet der Erfindung ist die Herstellung von Kochgefäßen unterschiedlicher Art, wie Kochtöpfe, Kasserolen, Bratgefäße, Frittiergeräte, Eierkocherschalen und dergleichen.

Bei einem Kochgefäß, das vollständig aus Aluminium besteht, ist es bereits bekannt, in der Bodenfläche eine Rille zur Aufnahme des Rohrheizkörpers vorzusehen, vgl. US-A 4 045 653.

Aus hygienischen Gründen, besonders wegen der Korrosionsfreiheit, sind Kochgefäße aus Edelstahl bevorzugt. Bei elektrisch geheizten Kochgefäßen ergeben sich jedoch besondere Probleme für die Wärmeübertragung auf den beheizten Boden des Kochgefäßes. In jedem Fall muß man eine Aluminiumplatte auf die Bodenfläche des Kochgefäßes durch Löten, Schweißen oder dergleich aufbringen. Die Aluminiumplatte kann auch unter Anwendung von Wärme und Druck auf die Bodenfläche aufgebracht werden, wobei unter dem Druck die Aluminiumplatte, die im Grundzustand einen kleineren Durchmesser als die Bodenfläche hat, radial nach außen fließt, so daß sich die Aluminiumplatte in diesem Reibschweißverfahren stoffschlüssig mit der Bodenfläche des Kochgefäßes verbindet, vgl. DE-A 1 527 540. In diese Aluminiumplatte kann dann der Rohrheizkörper unter Verwendung eines wendelförmigen Teils teilweise eingepreßt werden. Die Herstellung ist infolge der zahlreichen Bearbeitungsgänge aufwendig. Außerdem ist der Wärmeübergang schlecht, denn der Rohrheizkörper liegt auf zwei Dritteln seiner Außenfläche frei.

Aufgabe der Erfindung ist die Bereitstellung eines Verfahrens, das einen hohen Wärmeübergang von dem Rohrheizkörper auf das Kochgefäß sicherstellt und das außerdem wirtschaftlich durchführbar ist.

Diese Aufgabe wird nach der Erfindung bei einem Verfahren der eingangs genannten Art dadurch gelöst, daß beim Aufpressen der Aluminiumplatte oder des Aluminiumrings eine Rille zur Aufnahme eines Rohrheizkörpers durch Fließpressen in einem Arbeitsgang mit dem Reibschweißen geformt wird.

Die Erfindung unterscheidet sich insofern vom Stand der Technik, als die Rille einstückig und in einem Arbeitsgang mit dem Reibschweißen in die Aluminiumplatte eingeformt wird. Dadurch wird die Aluminiumplatte in einem Arbeitsgang fertig geformt und mit der Bodenfläche des Kochgefäßes aus Edelstahl verbunden. Eine wirtschaftliche Fertigung ist gewährleistet. Außerdem ist der Wärmeübdergang sehr gut, da der Rohrheizkörper über einen Großteil seines Umfangs eingebettet ist.

Bei einem Kochgefäß in Form einer Eierkocherschale kann die Aluminiumplatte auch als Ring ausgebildet sein.

Zur vollständigen formschlüssigen Festhaltung des Rohrheizkörpers ist vorgesehen, daß im Bereich der Rillenkanten nasenförmige Zungen ausgedrückt werden, die den Rohrheizkörper übergreifen.

Zur Erleichterung des elektrischen Anschlusses des Rohrheizkörpers ist vorgesehen, daß jeweils an den Enden der Rille Keilansätze geformt werden, an denen die Anschlußenden des Rohrheizkörpers aufgebogen werden.

Eine Ausführungsform der Erfindung wird im folgenden unter Bezugnahme auf die anliegende Zeichnung erläutert, in der darstellen:

Fig. I eine Ansicht des Kochgefäßes, zur Hälfte geschnitten,

Fig. 2 eine Bodenansicht des Kochgefäßes,

Fig. 3 einen vergrößerten Schnitt durch die Rille zur Aufnahme des Rohrheizelements,

Fig. 4 einen entsprechenden Schnitt zur Darstellung des fertig eingepreßten Rohrheizelements und

Fig. 5 einen Schnitt durch eine Eierkocherschale.

Das Kochgefäß 1 besteht aus Edelstahl mit einer im wesentlichen ebenen Bodenfläche 2. Eine profilierte Aluminiumplatte 3 ist unter Anwendung von Druck und Wärme nach einem Reibschweißverfahren mit der Bodenfläche 2 verbunden.

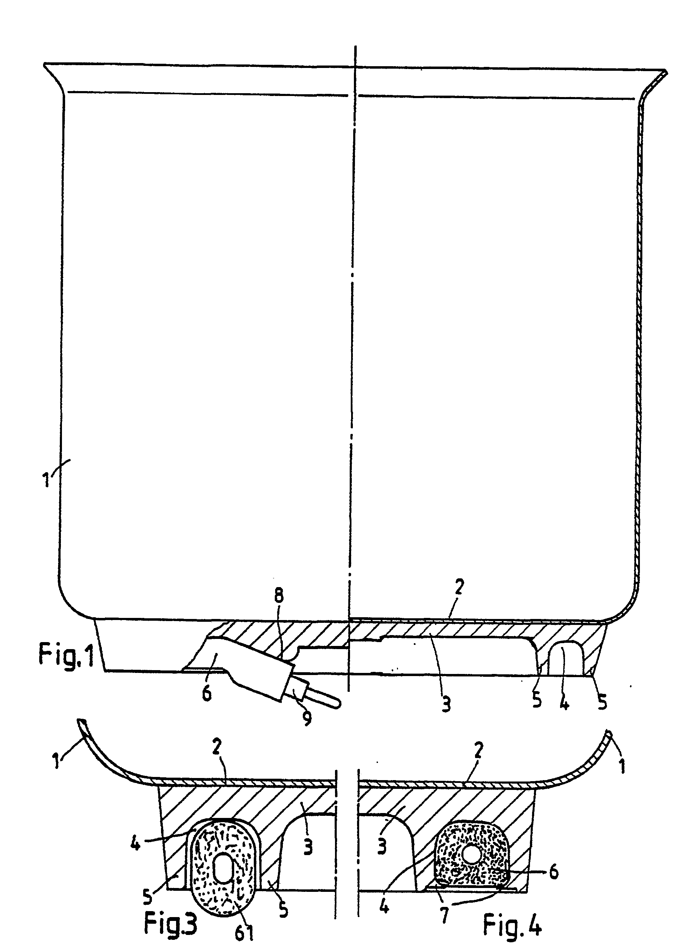

Der Vorformling für die Aluminiumplatte ist eine Ronde, deren Durchmesser geringer als der Durchmesser der Bodenfläche ist. Mittels einer Druckmatrize und unter Anwendung von Wärme wird die Aluminiumplatte 3 auf die Bodenfläche 2 aufgepreßt und dadurch zum Fließen gebracht. Die Matrize hat eine der Fig. 1 entsprechende Profilierung, so daß durch Druckanwendung eine Umfangsrille 4 mit vortehenden Wänden 5 geformt wird. Diese Formung der Aluminiumplatte 3 erfolgt in einem Arbeitsschritt durch Fließpressen während des Aufpressens auf die Bodenfläche 2, so daß sich im Zuge der Formung die Aluminiumplatte 3 mit der Bodenfläche 2 verbindet.

Die Umfangsrille 4 ist zur Aufnahme eines Rohrheizkörpers 6 bestimmt, der im Ausgangszustand einen Querschnitt 61 gemäß Fig. 3 hat, so daß er ohne Schwierigkeiten in die Umfangsrille 4 eingelegt werden kann. Der Rohrheizkörper 6 wird sodann in die Umfangsrille 4 fest eingepreßt und erhält dabei die Querschnittsform nach Fig. 4. Zur Sicherung des Rohrheizkörpers werden außerdem an den Wänden der Umfangsrille nasenförmige Zungen 7 ausgebildet, die den Umfang des Rohrheizkörpers übergreifen und dieselben festhalten. An den Enden der Umfangsrille sind Keilflächen 8 angeformt, an dem sich die Anschlußenden 9 des Rohrheizkörpers 6 hochdrücken. Es sind auch andere Ausbildungen der Anschlußenden möglich.

Das dargestellte Kochgefäß wird in einen Untersatz eingebaut, der hier nicht erläutert ist. Die Befestigung weiterer Bauteile oder die Halterung des Untersatzes ist hier nicht weiter erläutert.

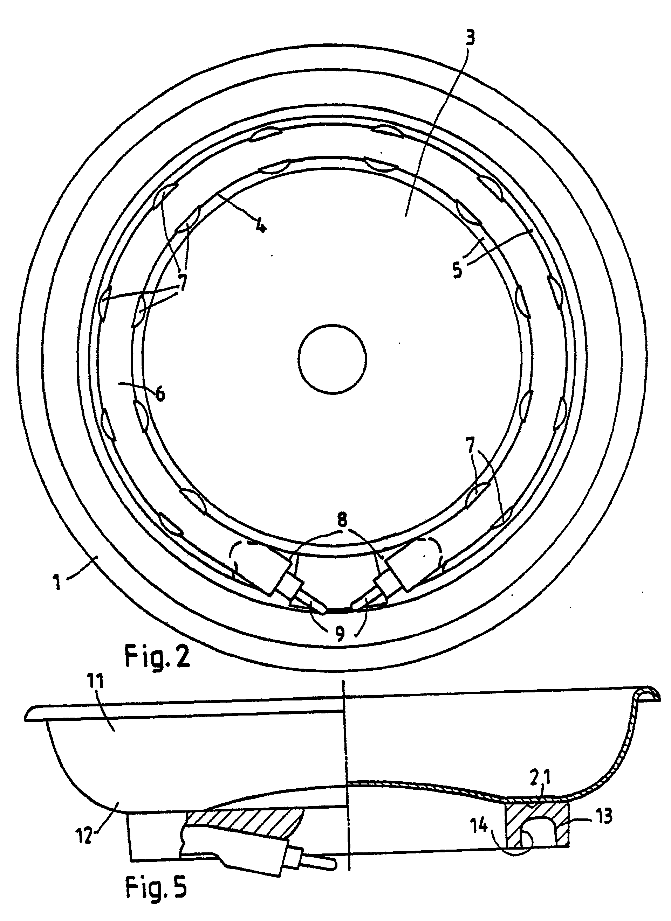

Fig. 5 zeigt eine Eierkocherschale 11 mit einer Bodenfläche 12, die im Zentrum nach oben gezogen ist und einen ringförmigen ebenen Abschnitt 21 aufweist. Als Vorformling wird ein offener Ring aus einem Aluminiumdraht mit Hilfe einer Druckmatrize unter Anwendung von Druck und Wärme nach einem Reibschweißverfahren mit dem ebenen Abschnitt 21 der Bodenplatte 12 verbunden und dabei verformt, so daß man einen profilierten Ring 13 mit einer ringförmigen Rille 14 zur Aufnahme des Rohrheizkörpers erhält.

Die Montage des Rohrheizkörper und die Fertigstellung der Eierkocherschale erfolgen in der zuvor beschriebenen Weise.

## Patentansprüche

1. Verfahren zur Herstellung eines Kochgefäßes aus Edelstahl mit einer bodenseitigen Aluminiumplatte, wonach eine Aluminiumplatte oder ein Aluminiumring unter Anwendung von Wärme und Druck durch eine Reibschweißverfahren auf die Bodenfläche des Kochgefäßes aufgepreßt und damit verbunden wird, dadurch gekennzeichnet, daß beim Aufpressen der Aluminiumplatte oder des Aluminiumrings eine Rille zur Aufnahme eines Rohrheizkörpers durch Fließpressen in einem Arbeitsgang mit dem Reibschweißen geformt wird.

2. Verfahren nach Anspruch 1, dadurch gekennzeichnet, daß im Bereich der Rillenkanten nasenförmige Zungen (7) ausgedrückt werden, die den Rohrheizkörper (6) übergreifen.

3. Verfahren nach Anspruch 2, dadurch gekennzeichnet, daß jeweils an den Enden der Rille (4) Keilansätze (8) geformt werden, an denen die Anschlußenden (9) des Rohrheizkörpers (6) aufgebogen werden.

## Claims

1. Process for the manufacture of a cooking vessel of special steel having a base plate of aluminium, in accordance with which an aluminium plate or an aluminium ring is pressed on and connected to the base surface of the cooking vessel by a friction welding process using heat and pressure, characterized in that during the pressing on of the aluminium plate or aluminium ring a groove is shaped to hold a tubular heating element, by extrusion, in one operation with the friction welding.

2. Process according to claim 1, characterized in that lug-shaped tabs (7) are pressed out to overlap the tubular heating element (6) in the area of the groove edges.

3. Process according to claim 2, characterized in that at each end of the groove (4) wedge projections (8) are shaped, up to which the terminating connectors (9) of the tubular heating element (6) are bent.

## Revendications

1. Procédé de fabrication d'un récipient à cuire en acier spécial comportant une plaque d'aluminium du côté du fond, selon lequel une plaque d'aluminium ou un anneau d'aluminium est, par un procédé de soudage par friction, pressé sur la surface de fond du récipient à cuire, avec application de chaleur et de pression, et est ainsi relié à ce dernier, caractérisé en ce que, lors du pressage de la plaque d'aluminium ou de l'anneau d'aluminium, une gorge destinée à recevoir un corps chauffant tubulaire est façonnée par formage par fluage en une opération avec le soudage par friction.

2. Procédé suivant la revendication 1, caractérisé en ce que des pattes (7) en forme d'ergots, qui recouvrent le corps chauffant tubulaire (6), sont pressées dans la zone des bords de gorge.

3. Procédé suivant la revendication 2, caractérisé en ce que des saillies en coin (8), sur lesquelles les extrémités de raccordement (9) du corps chauffant tubulaire sont recourbées, sont façonnées à chacune des extrémités de la gorge (4).

EP 0 307 555 B1

Fig.1

Fig.3

Fig.4

Fig. 2

Fig. 5